# EUROPÄISCHE PATENTANMELDUNG

(11) **EP 1 775 429 A1**
(43) Veröffentlichungstag der Anmeldung: **18.04.2007**
(21) Anmeldenummer: 05022279.3
(22) Anmeldetag: 12.10.2005
(51) Int. Cl.: F01K 7/16, F01D 25/10, F01K 13/02

(54) **Verfahren zum Aufwärmen einer Dampfturbine**

(71) Anmelder: SIEMENS AKTIENGESELLSCHAFT, 80333 München (DE)
(72) Erfinder: Gobrecht, Edwin, 40885 Ratingen (DE); Peters, Karsten, 45485 Wesel (DE)

(57) **Zusammenfassung**

Die Erfindung betrifft ein Verfahren zum Aufwärmen einer Dampfturbine (8) umfassend eine Mitteldruck-Teilturbine (2) und/oder Niederdruck-Teilturbine (6), wobei die Mitteldruck-Teilturbine (2) ausgangsseitig eine Staueinrichtung (7) aufweist, wobei ein während eines Anfahrvorgangs durch die Mitteldruck-Teilturbine (2) strömender Dampf an einem Ausgang (3) mittels der Staueinrichtung (7) derart gestaut wird, dass der Druck des Dampfes in der Mitteldruck-Teilturbine (2) erhöht wird. Der aus der Mitteldruck-Teilturbine (2) ausströmende Dampf wird angestaut, wodurch sich der Druck und die Temperatur des Dampfes erhöhen. Der Wärmeübergang des Dampfes die auf der Mitteldruck-Teilturbine (2) vorhandenen dickwandigen Bauteile sowie der Mitteldruck-Teilturbinenwelle wird erhöht. Somit verkürzt sich die Anfahrzeit für die Dampfturbine.

## Beschreibung

Die Erfindung betrifft ein Verfahren zum Aufwärmen einer Dampfturbine umfassend eine Mitteldruck-Teilturbine und/oder Niederdruck-Teilturbine, wobei die Mitteldruck-Teilturbine ausgangsseitig eine Staueinrichtung aufweist.

Eine Dampfturbine wird auch als Strömungsmaschine bezeichnet. Unter der Sammelbezeichnung Strömungsmaschinen werden Wasserturbinen, Dampf- und Gasturbinen, Windräder, Kreiselpumpen und Kreiselverdichter sowie Propeller zusammengefasst. Allen diesen Maschinen ist gemeinsam, dass sie dem Zweck dienen einem Fluid Energie zu entziehen, um damit eine andere Maschine anzutreiben oder umgekehrt, einem Fluid Energie zuzuführen, um dessen Druck zu erhöhen.

Unter einer Hochdruck-Teilturbine wird in dieser Anmeldung eine Teilturbine verstanden, die eingangsseitig mit überhitztem Dampf beaufschlagt wird, der Temperaturen bis zu 620°C und einen Druck bis zu 300 bar aufweisen kann. Die vorgenannten Temperatur- und Druckangaben sind lediglich Anhaltsgrößen. Teilturbinen, die für höhere Temperaturen und für höhere Drücke ausgelegt sind, können ebenso als Hochdruck-Teilturbine bezeichnet werden. Eine Mitteldruck-Teilturbine wird üblicherweise mit überhitztem Dampf beaufschlagt, der eine Temperatur von 600°C und einen Druck von ungefähr 140 bar aufweist. Eine Niederdruck-Teilturbine wird üblicherweise mit dem Dampf beaufschlagt, der aus der Mitteldruck-Teilturbine ausströmt. Der aus der Niederdruck-Teilturbine ausströmende Dampf wird schließlich in einem Kondensator gesammelt und wieder in Wasser umgewandelt. In der Regel wird der aus der Hochdruck-Teilturbine ausströmende Dampf in einem Zwischenüberhitzer erhitzt und in die Mitteldruck-Teilturbine eingeströmt.

In der kommunalen Energieversorgung ist es von großer Bedeutung, dass die zum Antrieb der Generatoren ausgebildeten Dampfturbinen möglichst schnell auf die Nenndrehzahlen hochgefahren werden können. Die Nenndrehzahlen liegen bei 50 bzw. 60 Hz. Es sind aber auch andere Nenndrehzahlen bekannt.

Problematisch hierbei ist, dass die Wellen und andere dickwandige Bauteile in Dampfturbinen vor einer Belastung mit vollen Betriebsparametern kontrolliert vorgewärmt werden müssen, um unzulässige Spannungen in den Bauteilen zu verhindern.

Üblicherweise werden die Turbinenwellen von Mitteldruck-Teilturbinen gegen Vakuum eingefahren. Das bedeutet, ausgangsseitig der Mitteldruck-Teilturbine herrscht ein vergleichsweise niedriger Druck. Aus diesem Grund ist die Sättigungstemperatur und die Dichte des durchströmenden Dampfes in der Mitteldruck-Teilturbine niedrig. Dadurch ist der Wärmeeintrag in die Welle durch den Dampf gering, was zu einer Verzögerung beim Vorwärmen einer Mitteldruck-Teilturbine führt. Dadurch verlängert sich insgesamt die Anfahrzeit der Dampfturbine. Eine zu lange Anfahrzeit wird als störend empfunden.

Aufgabe der Erfindung ist es daher, ein Verfahren anzugeben, mit dem eine Dampfturbine schnell erwärmt werden kann.

Die Aufgabe wird gelöst durch ein Verfahren zum Aufwärmen einer Dampfturbine, umfassend eine Mitteldruck-Teilturbine und/oder Niederdruck-Teilturbine, wobei die Mitteldruck-Teilturbine ausgangsseitig eine Staueinrichtung aufweist, wobei ein während eines Anfahrvorgangs durch die Mitteldruck-Teilturbine strömender Dampf an einem Ausgang mittels der Staueinrichtung derart gestaut wird, dass der Druck des Dampfes in der Mitteldruck-Teilturbine derart erhöht wird, dass die Sättigungstemperatur des Dampfes angehoben wird.

Die Erfindung geht unter anderem von dem Aspekt aus, dass durch ein kontrolliertes Anstauen des Dampfstromes am Ausgang der Mitteldruck-Teilturbine beim Anfahrvorgang der Dampfturbine der Druck angehoben wird. Beispielsweise kann durch ein Schließen einer Klappe der Druck am Ausgang der Mitteldruck-Teilturbine angehoben werden. Das Anheben des Druckes führt dazu, dass die Sättigungstemperatur des Dampfes angehoben wird. Die Wärmeübergangswerte sind bei einem gesättigten Dampf besonders hoch. Diese Wärmeübergangswerte sind höher als bei einem konvektiven Aufwärmen. Daher ist die Temperatur des Dampfes bei einer Sättigung für den Wärmeeintrag in die Welle maßgebend. Beispielsweise liegt die Temperatur ohne das erfindungsgemäße Anstauen bei ca. 80°C und ca. 0,5 bar. Durch ein Anstauen des ausgangsseitigen Dampfes der Mitteldruck-Teilturbine an der Staueinrichtung auf beispielsweise 4 bar ergibt sich dadurch eine Sättigungstemperatur des Dampfes von 144°C. Der Wärmeübergang auf die in der Dampfturbine angeordnete Welle erhöht sich dadurch, was zur Folge hat, dass die Welle sich vergleichsweise schnell erwärmt.

Des Weiteren wird durch die höhere Dampfdichte auch eine anschließende konvektive Überhitzung einer Mitteldruck-Teilturbinenwelle beschleunigt.

Durch diese erfindungsgemäße Maßnahme, bei der Wärme schneller in eine Mitteldruck-Teilturbinenwelle eingebracht werden kann, kann der Startvorgang einer Dampfturbine bei einem Kaltstart von bis zu einer Stunde verkürzt werden. In einer vorteilhaften Weiterbildung wird die Staueinrichtung in der Überströmleitung angeordnet. Die Überströmleitung ist hierbei eine Leitung, die strömungstechnisch den Ausgang der Mitteldruck-Teilturbine mit dem Eingang einer Niederdruck-Teilturbine verbindet.

Durch diese Maßnahme ist es vergleichsweise einfach, den Druck ausgangsseitig einer Mitteldruck-Teilturbine zu erhöhen.

In einer weiteren vorteilhaften Weiterbildung wird die Staueinrichtung regelbar ausgebildet.

Dadurch kann der Aufwärmvorgang der Dampfturbine geregelt werden. Beispielsweise könnte ein nicht kontinuierlich in die Mitteldruck-Teilturbine einströmender Dampfmassenstrom durch die regelbare Staueinrichtung derart geändert werden, dass der Wärmeeintrag in die dickwandigen Bauteile der Mitteldruck-Teilturbine gleichmäßig erfolgt.

Als Eingangsgröße für eine Regelung der Staueinrichtung könnte die Temperatur, der Druck und/oder der Dampfmassenstrom verwendet werden.

In einer weiteren vorteilhaften Weiterbildung wird die Staueinrichtung als verschwenkbare Klappe ausgebildet. Die Ausbildung einer verschwenkbaren Klappe ist eine vergleichsweise kostengünstige Maßnahme mit der der gewünschte Effekt, nämlich das Anstauen eines Dampfes erreicht wird.

In einer weiteren vorteilhaften Weiterbildung wird der Dampf ausgangsseitig der Mitteldruck-Teilturbine auf Druckwerte zwischen 3 und 5 bar und Temperaturwerte zwischen 130°C und 150°C angestaut.

Es hat sich gezeigt, dass bei diesen Druck- und Temperaturwerten der Wärmeeintrag des Dampfes auf die Mitteldruck-Teilturbinenwelle besonders hoch ist.

Ausführungsbeispiele der Erfindung werden nachfolgend unter Bezugnahme auf die Zeichnungen näher beschrieben. Dabei haben mit denselben Bezugszeichen versehene Komponenten die gleiche Funktionsweise.

Dabei zeigt:

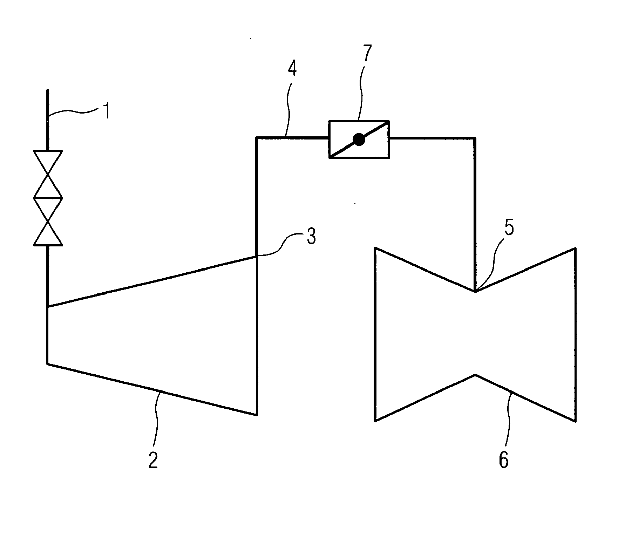

- Figur 1: eine schematische Darstellung einer Mitteldruck-Teilturbine und einer Niederdruck-Teilturbine.

In der Figur 1 ist eine schematische Darstellung einer Dampfturbine 8 dargestellt. Eine Dampfturbine kann eine Hochdruck-Teilturbine, Mitteldruck-Teilturbine und/oder eine Niederdruck-Teilturbine umfassen. Die in der Figur dargstellte Dampfturbine umfasst eine Mitteldruck- und eine Niederdruck-Teilturbine. In der Regel strömt Frischdampf in eine in der Figur nicht dargestellte Hochdruck-Teilturbine und wird dort entspannt und auf eine niedrigere Temperatur abgekühlt. Dieser entspannte und abgekühlte Dampf wird in einem in der Figur 1 nicht näher dargestellten Zwischenüberhitzer auf eine höhere Temperatur erhitzt und anschließend über eine Leitung 1 in eine Mitteldruck-Teilturbine 2 eingeströmt. Der in die Mitteldruck-Teilturbine 2 einströmende Dampf entspannt sich, wobei der Druck und die Temperatur des Dampfes dabei absinken.

Ausgangsseitig der Mitteldruck-Teilturbine 2 strömt der entspannte Dampf aus einem Ausgang 3 über eine Überströmleitung 4 in einen Eingang 5 einer Niederdruck-Teilturbine 6. Die in der Figur 1 dargestellte Mitteldruck- 2 und Niederdruck-Teilturbine 6 sind als Teil einer Dampfturbine zu sehen. Der Übersichtlichkeit wegen sind die Hochdruck-Teilturbine, der Zwischenüberhitzer, der Kondensator und verschiedene Einheiten wie z. B. eine Pumpe nicht näher dargestellt.

In der Überströmleitung 4 ist eine Staueinrichtung 7 angeordnet. Die Staueinrichtung 7 kann regelbar und/oder als verschwenkbare Klappe ausgebildet werden. Während eines Anfahrvorganges wird die Staueinrichtung 7 derart betrieben, dass der am Ausgang 3 ausströmende Dampf vor der Regelklappe gestaut wird, wodurch der Druck des Dampfes erhöht wird. Dadurch wird die Sättigungstemperatur des Dampfes erhöht, was zu einer Erhöhung der Temperaturübergangswerte des Dampfes auf die Mitteldruck-Turbinenwelle der Mitteldruck-Teilturbine 2 führt. Die Mitteldruck-Turbinenwelle ist nicht näher dargestellt.

Es hat sich gezeigt, dass der Dampf ausgangsseitig auf Werte zwischen 3 und 5 bar und 130°C bis 150°C angestaut werden sollte, um gute Wärmeübergangswerte zu erhalten.

Der Anfahrvorgang einer Dampfturbine verkürzt sich dadurch um ca. eine Stunde.

## Patentansprüche

1. Verfahren zum Aufwärmen einer Dampfturbine,
die eine Mitteldruck-Teilturbine (2) und/oder Niederdruck-Teilturbine (6) umfasst,
wobei die Mitteldruck-Teilturbine (2) ausgangsseitig eine Staueinrichtung (7) aufweist,
**dadurch gekennzeichnet, dass**
ein während eines Anfahrvorgangs durch die Mitteldruck-Teilturbine (2) strömender Dampf an einem Ausgang (3) mittels der Staueinrichtung (7) derart gestaut wird, dass der Druck des Dampfes in der Mitteldruck-Teilturbine (2) derart erhöht wird, dass die Sättigungstemperatur des Dampfes angehoben wird.

2. Verfahren nach Anspruch 1,
bei dem die Staueinrichtung (7) in der Überströmleitung (4) angeordnet wird.

3. Verfahren nach Anspruch 1 oder 2,
bei dem die Staueinrichtung (7) regelbar ausgebildet wird.

4. Verfahren nach Anspruch 1, 2 oder 3,
bei dem die Staueinrichtung (7) als verschwenkbare Klappe ausgebildet wird.

5. Verfahren nach einem der Ansprüche 1 bis 3,
bei dem der Dampf ausgangsseitig auf Werte zwischen 3 und 5 bar und 130°C bis 150°C angestaut wird.
